# EUROPEAN PATENT APPLICATION

(11) **EP 4 734 185 A1**
(43) Date of publication of application: **29.04.2026**
(21) Application number: 24825667.9
(22) Date of filing: 28.05.2024
(51) Int. Cl.: H01M 4/525, H01M 4/13, H01M 4/36, H01M 4/62, H01M 10/052

(54) **POSITIVE ELECTRODE MATERIAL, POSITIVE ELECTRODE, AND BATTERY**

(30) Priority: 22.06.2023 JP 2023102658
(71) Applicant: Panasonic Intellectual Property Management Co., Ltd., Kadoma-shi, Osaka 571-0057 (JP)
(72) Inventor: NISHIO, Yusuke, Kadoma-shi, Osaka 571-0057 (JP); MIYATAKE, Kazufumi, Kadoma-shi, Osaka 571-0057 (JP); IWAMOTO, Kazuya, Kadoma-shi, Osaka 571-0057 (JP)
(74) Representative: Grünecker Patent- und Rechtsanwälte PartG mbB
(86) International application number: PCT/JP2024/019514
(87) International publication number: WO 2024/262260

(57) **Abstract**

A cathode material 10 of the present disclosure includes a cathode active material 100, a coating layer 104 containing a first solid electrolyte 101, and coating at least part of a surface of the cathode active material 100, and a second solid electrolyte 102. The first solid electrolyte 101 contains Li, Al, and X, and does not contain Ti. X is at least one selected from the group consisting of F, Cl, Br, and I. The ratio of the volume of the first solid electrolyte 101 to the total volume of the first solid electrolyte 101 and the second solid electrolyte 102 is greater than or equal to 1.0% and less than or equal to 25.0%.

## Description

### Technical Field

The present disclosure relates to a cathode material, a cathode, and a battery.

### Background Art

PTL 1 discloses a method for producing an active material, the method including coating a cathode active material with an oxide solid electrolyte, and further covering it with a sulfide solid electrolyte, and a battery using the same.

### Citation List

### Patent Literature

PTL 1: Japanese Unexamined Patent Application Publication No. 2016-18735

### Summary of Invention

In the technology of the related art, it is desired to improve the deterioration resistance of a battery to a charge-discharge cycle.

### Solution to Problem

The present disclosure provides a cathode material including:
a cathode active material;
a coating layer containing a first solid electrolyte, and coating at least part of a surface of the cathode active material; and
a second solid electrolyte, wherein
the first solid electrolyte contains Li, Al, and X, and does not contain Ti,
X is at least one selected from the group consisting of F, Cl, Br, and I, and
a ratio of a volume of the first solid electrolyte to a total volume of the first solid electrolyte and the second solid electrolyte is greater than or equal to 1.0% and less than or equal to 25.0%.

The cathode material of the present disclosure can improve the deterioration resistance of a battery to a charge-discharge cycle.

### Brief Description of Drawings

[Fig. 1] Fig. 1 is a sectional view of a schematic configuration of a cathode material according to a first embodiment.
[Fig. 2] Fig. 2 is a sectional view of a schematic configuration of a cathode material according to a modification.
[Fig. 3] Fig. 3 is a sectional view of a schematic configuration of a battery according to a second embodiment.

### Description of Embodiments

### (Underlying Knowledge Forming Basis of the Present Disclosure)

It is recognized that batteries containing solid electrolytes are less likely to cause side reactions, and have good cycle characteristics, but this is not always the case. For example, oxygen may be generated from a cathode active material in the last stage of a charge. The generated oxygen oxidizes the solid electrolyte to increase the internal resistance of the battery. As a result, the capacity decreases along with charges and discharges. Thus, further improvement in cycle characteristics is also desired for batteries containing solid electrolytes.

Embodiments of the present disclosure will be described below with reference to the drawings. The present disclosure is not limited to the following embodiments.

### (First Embodiment)

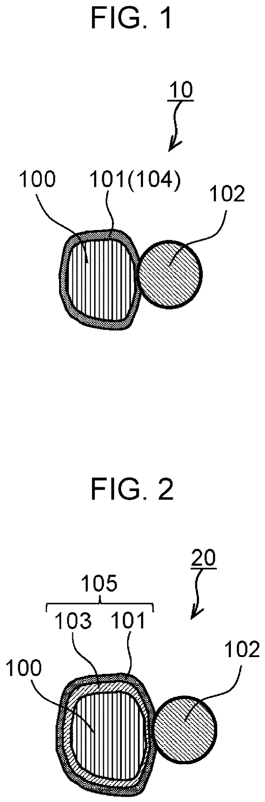

Fig. 1 is a sectional view of a schematic configuration of a cathode material according to a first embodiment. A cathode material 10 includes a cathode active material 100, a first solid electrolyte 101, and a second solid electrolyte 102. The first solid electrolyte 101 is included in a coating layer 104 coating at least part of the surface of the cathode active material 100.

The first solid electrolyte 101 contains Li, Al, and X, and does not contain Ti. X is at least one selected from the group consisting of F, Cl, Br, and I. In the cathode material 10, a ratio V1/V12 of a volume V1 of the first solid electrolyte to a total volume V12 of the first solid electrolyte 101 and the second solid electrolyte 102 is greater than or equal to 1.0% and less than or equal to 25.0%.

The first solid electrolyte 101 can be a solid electrolyte containing a halogen, which is what is called a halide solid electrolyte. The halide solid electrolyte has excellent oxidation resistance. Therefore, by covering the cathode active material 100 with the first solid electrolyte 101, the oxidation of the second solid electrolyte 102 due to the reaction of the cathode active material 100 and the second solid electrolyte 102 can be inhibited. This inhibits the deterioration of a battery containing the cathode material 10, and can thus improve the cycle characteristics of the battery containing the cathode material 10. In addition, the first solid electrolyte 101 does not contain Ti, and thus improves in durability.

If the ratio V1/V12 is too low, the first solid electrolyte 101 is insufficient, and the effect of inhibiting the oxidation reaction of the second solid electrolyte 102 may not be sufficiently obtained. If the ratio V1/V12 is too high, there is a concern about the insufficiency of the ionic conductivity of the cathode material 10. The ratio V1/V12 may be greater than or equal to 1.5% and less than or equal to 24.2%, may be greater than or equal to 4.0% and less than or equal to 15.0%, may be greater than or equal to 4.4% and less than or equal to 12%, may be greater than or equal to 5.5% and less than or equal to 15.0%, or may be greater than or equal to 5.8% and less than or equal to 12%. Such a configuration can achieve both the initial performance and the deterioration resistance to the charge-discharge cycle of the battery.

The total volume V12 of the first solid electrolyte 101 and the second solid electrolyte 102 is the sum of the volume V1 of the first solid electrolyte 101 and the volume V2 of the second solid electrolyte 102. The volume V1 of the first solid electrolyte 101 is the total volume of the first solid electrolyte 101 in the powder of the cathode material 10. The volume V2 of the second solid electrolyte 102 is the total volume of the second solid electrolyte 102 in the powder of the cathode material 10. That is, the ratio V1/V12 is a value determined from the entire of a fixed amount of the powder of the cathode material 10.

In the cathode material 10, a ratio V1/Vt of the volume V1 of the first solid electrolyte 101 to a total volume Vt of the first solid electrolyte 101 and the cathode active material 100 may be greater than or equal to 1.0% and less than or equal to 16.0%.

If the ratio V1/Vt is too low, the first solid electrolyte 101 is insufficient, and the effect of inhibiting the oxidation reaction of the second solid electrolyte 102 may not be sufficiently obtained. If the ratio V1/Vt is too high, there is a concern about the insufficiency of the ionic conductivity of the cathode material 10. The ratio V1/Vt may be greater than or equal to 1.1% and less than or equal to 15.1%, may be greater than or equal to 3.0% and less than or equal to 10.0%, may be greater than or equal to 3.1% and less than or equal to 8.1%, may be greater than or equal to 4.0% and less than or equal to 10.0%, or may be greater than or equal to 4.1% and less than or equal to 8.1%. Such a configuration can achieve both the initial performance and the deterioration resistance to the charge-discharge cycle of the battery.

The total volume Vt of the first solid electrolyte 101 and the cathode active material 100 is the sum of the volume V1 of the first solid electrolyte 101 and a volume Vp of the cathode active material 100. The volume V1 of the first solid electrolyte 101 is the total volume of the first solid electrolyte 101 in the powder of the cathode material 10. The volume Vp of the cathode active material 100 is the total volume of the cathode active material 100 in the powder of the cathode material 10. That is, the ratio V1/Vt is a value determined from the entire of a fixed amount of the powder of the cathode material 10.

The ratio V1/Vt and the ratio V1/V12 can be calculated from the charge amounts of materials, and can also be calculated by the method described below. Specifically, a section of a cathode containing the cathode material 10 is observed with a scanning electron microscope (SEM-EDX) to acquire a two-dimensional mapping image of elements. By acquiring the two-dimensional mapping image at a resolution of 1,280 × 960, a magnification of 1,000× to 3,000×, and an acceleration voltage of 5 kV, the ratios can be calculated. The two-dimensional mapping image of elements is analyzed, and the occupied area of the cathode active material 100, the occupied area of the first solid electrolyte 101, and the occupied area of the second solid electrolyte 102 can be identified from the number of pixels of elements contained in each of the cathode active material 100, the first solid electrolyte 101, and the second solid electrolyte 102. The SEM-EDX observation and an etching process with a focused ion beam (FIB) apparatus or the like are repeated to reconstruct the acquired image. This provides the three-dimensional structural information of the cathode containing the cathode material 10. From the three-dimensional structural information, the ratio V1/Vt and the ratio V1/V12 can be determined. This method is often called the three-dimensional SEM observation method.

In the cathode material 10, the ratio of the volume of the cathode active material 100 to the volume of the solid electrolyte "v1:100 - v1" may satisfy 30 ≤ v1 ≤ 95. When 30 ≤ v1 is satisfied, the energy density of the battery is sufficiently ensured. When v1 ≤ 95 is satisfied, the battery can operate at high output. The "volume of the solid electrolyte" is the total volume of the first solid electrolyte 101 and the second solid electrolyte 102.

In the present embodiment, the second solid electrolyte 102 is in contact with the cathode active material 100 via the coating layer 104. By applying the technology of the present disclosure to such a configuration, a higher effect can be obtained.

### <Cathode Active Material>

The cathode active material 100 contains a material having a characteristic of occluding and releasing metal ions (for example, lithium ions). Examples of the cathode active material 100 include lithium-containing metal oxides such as lithium-containing transition metal oxides, lithium-containing transition metal phosphates, transition metal fluorides, polyanion materials, fluorinated polyanion materials, transition metal sulfides, transition metal oxysulfides, and transition metal oxynitrides. The transition metal may be a range that does not include d¹⁰ elements (Zn, Cd, and Hg in Group 12), lanthanoid (except La (5d¹ 6s²)), or actinoid (except Ac (6d¹ 7s²)) in accordance with, for example, the definitions described in "Gold Book" and "Red Book" of IUPAC. When a lithium-containing transition metal oxide having a layered rock salt structure is used as the cathode active material 100, the production costs of the battery can be reduced, and the average discharge voltage thereof can be increased. Examples of the lithium-containing transition metal oxide having a layered rock salt structure include Li(Ni,Co,Al)O₂, Li(Ni,Co,Mn)O₂, and LiCoO₂. By replacing part of the elements contained in these materials with a small number of other elements, their characteristics can also be improved.

In the present disclosure, "(A,B,C)" means "at least one selected from the group consisting of A, B, and C."

The lithium-containing transition metal oxide as the cathode active material 100 may contain Li and Ni as well as having a layered rock salt structure. With such a structure, the battery is expected to have good output characteristics.

In the lithium-containing transition metal oxide having a layered rock salt structure, when the ratio of the amount of substance of Ni to the total amount of substance of cations other than lithium is high, a charge-discharge capacity per unit weight increases. In the lithium-containing transition metal oxide, the ratio of the amount of substance of Ni to the total of the amounts of substance of cations other than Li is, for example, greater than or equal to 0.6. The upper limit of the ratio of the amount of substance of Ni to the total of the amounts of substance of cations other than Li is, for example, 0.95.

Note that when the ratio of the amount of substance of Ni is high, a problem with the durability of the battery to the charge-discharge cycle tends to arise. Therefore, it is especially effective to apply the technology of the present disclosure to a battery containing a cathode active material having a high ratio of the amount of substance of Ni.

The cathode active material 100 has, for example, a particulate shape. The shape of the particles of the cathode active material 100 is not particularly limited. The shape of the particles of the cathode active material 100 can be spherical, spheroidal, scaly, or fibrous.

The median diameter of the cathode active material 100 may be greater than or equal to 0.1 µm and less than or equal to 100 µm. When the median diameter of the cathode active material 100 is greater than or equal to 0.1 µm, in the cathode material 10, the cathode active material 100, the first solid electrolyte 101, and the second solid electrolyte 102 can form a good dispersed state. Consequently, the charge-discharge characteristics of the battery improve. When the median diameter of the cathode active material 100 is less than or equal to 100 µm, the diffusion rate of lithium inside the cathode active material 100 is sufficiently ensured. Therefore, the battery can operate at high output.

The median diameter of the cathode active material 100 may be larger than the median diameter of the second solid electrolyte 102. With this, the cathode active material 100 and the second solid electrolyte 102 can form a good dispersed state.

In the present specification, the "median diameter" means a particle size when a cumulative volume in a volume-based particle size distribution is equal to 50%. The volume-based particle size distribution is measured with, for example, a laser diffraction type measurement apparatus or an image analysis apparatus.

### <First Solid Electrolyte>

The first solid electrolyte 101 has ionic conductivity. The ionic conductivity is typically lithium-ion conductivity. The raw materials of the first solid electrolyte 101, by-products produced when the first solid electrolyte 101 is produced, and the like are included in unavoidable impurities. The ratio of the mass of the unavoidable impurities with respect to the mass of the entire first solid electrolyte 101 may be less than or equal to 5%, may be less than or equal to 3%, may be less than or equal to 1%, or may be less than or equal to 0.5%.

The first solid electrolyte 101 is a material that contains Li, Al, and X, and a material that does not contain Ti. X is as previously described. Such a material has excellent ionic conductivity and oxidation resistance. Therefore, the cathode material 10 having the first solid electrolyte 101 improves the charge-discharge efficiency of the battery and the thermal stability of the battery.

The "material that does not contain Ti" means a material synthesized without positively using Ti as a raw material.

The first solid electrolyte 101 may contain at least one element selected from the group consisting of metal elements other than Li, Ti, and Al and metalloid elements. By replacing Al with a different element, various effects such as improvement in lithium-ion conductivity and improvement in mechanical characteristics can be expected.

The "metalloid elements" are B, Si, Ge, As, Sb, and Te. The "metal elements" are all elements included in Group 1 to Group 12 of the periodic table (except hydrogen) and all elements included in Group 13 to Group 16 of the periodic table (except B, Si, Ge, As, Sb, Te, C, N, P, O, S, and Se). That is, the metal elements are an element group that can be cations when inorganic compounds are formed with halogen elements.

The first solid electrolyte 101 may contain at least one selected from the group consisting of Zr, Y, Ca, and Mg. By containing such elements, the first solid electrolyte 101 shows high lithium-ion conductivity.

The first solid electrolyte 101 may contain a phase represented by Formula (1):

Li_{6-αy}(M₁₋ₓAlₓ)_{y}F₆) (1)

where M is at least one element selected from the group consisting of metal elements other than Ti and Al and metalloid elements, α is an average valence of (M₁₋ₓAlₓ), and 0 < x ≤ 1 and 0 < y ≤ 1.5 are satisfied.

The halide solid electrolyte containing the phase represented by Formula (1) has higher ionic conductivity than halides consisting only of Li and a halogen element, such as LiF. Therefore, when the battery contains the halide solid electrolyte containing the phase represented by Formula (1), the charge-discharge efficiency of the battery can be improved.

The first solid electrolyte 101 may consist essentially of Li, Al, and X. "The first solid electrolyte 101 consists essentially of Li, Al, and X" means that the molar ratio (that is, the mole fraction) of the total of the amounts of substance of Li, Al, and X to the total of the amounts of substance of all elements constituting the first solid electrolyte 101 is greater than or equal to 90%. As an example, the molar ratio (that is, the mole fraction) may be greater than or equal to 95%. The first solid electrolyte 101 may consist only of Li, Al, and X except unavoidable impurities.

The ratio of the amount of substance of F to the total of the amounts of substance of anions constituting the first solid electrolyte 101 may be greater than or equal to 0.5 and less than or equal to 1.0. With such a configuration, the oxidation resistance of the first solid electrolyte 101 improves. The ratio may be 1.0. That is, the anions may be only F. With such a configuration, the first solid electrolyte 101 is expected to have even higher oxidation resistance.

In the first solid electrolyte 101, the ratio of the amount of substance of Li to the amounts of substance of cations other than Li may be greater than or equal to 1.5 and less than or equal to 6.0. With such a configuration, the lithium-ion conductivity of the first solid electrolyte 101 can be improved.

The first solid electrolyte 101 may be crystalline or amorphous.

The shape of the first solid electrolyte 101 is, for example, needle-like, spherical, or spheroidal. The first solid electrolyte 101 may be particles.

When the shape of the first solid electrolyte 101 is, for example, particulate (for example, spherical), the first solid electrolyte 101 may have a median diameter of greater than or equal to 0.001 µm and less than or equal to 100 µm. The median diameter means a particle size when a cumulative volume in a volume-based particle size distribution is equal to 50%. The volume-based particle size distribution is measured with, for example, a laser diffraction type measurement apparatus or an image analysis apparatus.

The first solid electrolyte 101 forms the coating layer 104 coating the surface of the cathode active material 100. The thickness of the coating layer 104 is, for example, greater than or equal to 1 nm and less than or equal to 500 nm. When the thickness of the coating layer 104 is appropriately adjusted, the contact between the cathode active material 100 and the second solid electrolyte 102 can be sufficiently inhibited. The thickness of the coating layer 104 can be identified by thinning the coated active material by a method such as ion milling, and observing a section of the coated active material with an electron microscope. The average value of thicknesses measured at any multiple positions (for example, five points) can be regarded as the thickness of the coating layer 104.

The first solid electrolyte 101 may be a solid electrolyte that does not contain sulfur. In this case, sulfur-containing gases such as hydrogen sulfide gas can be prevented from being generated from the solid electrolyte. The solid electrolyte that does not contain sulfur means a solid electrolyte represented by a formula that does not contain any sulfur element. Therefore, a solid electrolyte containing a trace amount of sulfur, such as a solid electrolyte with a sulfur content of less than or equal to 0.1% by mass, belongs to the solid electrolyte that does not contain sulfur. The first solid electrolyte 101 may further contain oxygen as an anion other than halogen elements.

### <Method for Producing Halide Solid Electrolyte>

The halide solid electrolyte as the first solid electrolyte 101 can be produced by, for example, the following method.

In order to give a target composition, raw material powders are provided, and mixed. The raw material powders may be, for example, halides.

As an example, when the target composition is Li₃AlF₆, LiF and AlF₃ are mixed in a molar ratio of about 3:1. In order to cancel composition changes that can occur in a synthesis process, the raw material powders may be mixed in a molar ratio adjusted in advance.

The raw material powders are mechanochemically reacted with each other in a mixing apparatus such a planetary ball mill (that is, using a method of mechanochemical milling) to obtain a reaction product. The reaction product may be heat-treated in a vacuum or in an inert atmosphere. Alternatively, the mixture of the raw material powders may be heat-treated in a vacuum or in an inert atmosphere to obtain a reaction product. The heat treatment is desirably performed, for example, at higher than or equal to 100°C and lower than or equal to 400°C for longer than or equal to 1 hour. In order to inhibit composition changes in the heat treatment, the raw material powders are desirably heat-treated in a hermetically sealed vessel such as a quartz tube.

Through these steps, the halide solid electrolyte is obtained.

### <Second Solid Electrolyte>

The second solid electrolyte 102 may contain at least one selected from the group consisting of a halide solid electrolyte, a sulfide solid electrolyte, an oxide solid electrolyte, a polymeric solid electrolyte, and a complex hydride solid electrolyte.

Examples of the halide solid electrolyte include the materials previously described as the first solid electrolyte 101. The composition of the second solid electrolyte 102 may be the same as the composition of the first solid electrolyte 101 or different therefrom.

The oxide solid electrolyte is a solid electrolyte containing oxygen. The oxide solid electrolyte may further contain anions other than sulfur and halogen elements as anions other than oxygen.

Examples of the oxide solid electrolyte include a NASICON type solid electrolyte represented by LiTi₂(PO₄)₃ and element substitution products thereof, a perovskite type solid electrolyte such as (LaLi)TiO₃, a LISICON type solid electrolyte represented by Li₁₄ZnGe₄O₁₆, Li₄SiO₄, and LiGeO₄ and element substitution products thereof, a garnet type solid electrolyte represented by Li₇La₃Zr₂O₁₂ and element substitution products, Li₃PO₄ and N-substituted products thereof, and glass or glass ceramic in which materials such as Li₂SO₄ and Li₂CO₃ are added to base materials containing Li-B-O compounds such as LiBO₂ and Li₃BO₃.

As the polymeric solid electrolyte, compounds of a polymer compound and a lithium salt can be used. The polymer compound may have an ethylene oxide structure. The polymer compound having an ethylene oxide structure can contain a large amount of the lithium salt. Therefore, the ionic conductivity can be further increased. Examples of the lithium salt include LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), and LiC(SO₂CF₃)₃. One kind of lithium salt selected from these may be used alone, or a mixture of two or more kinds of lithium salts selected from these may be used.

As the complex hydride solid electrolyte, LiBH₄-LiI, LiBH₄-P₂S₅, and the like can be used.

The second solid electrolyte 102 may contain Li and S. In other words, the second solid electrolyte 102 may contain a sulfur solid electrolyte. The sulfur solid electrolyte has high ionic conductivity, and can improve the charge-discharge efficiency of the battery. On the other hand, the sulfur solid electrolyte may have poor oxidation resistance. When the sulfur solid electrolyte is contained as the second solid electrolyte 102 in the battery, by applying the technology of the present disclosure, a high effect is obtained.

As the sulfide solid electrolyte, Li₂S-P₂S₅, Li₂S-SiS₂, Li₂S-B₂S₃, Li₂S-GeS₂, Li_{3.25}Ge_{0.25}P_{0.75}S₄, Li₁₀GeP₂S₁₂, and the like can be used. LiX, Li₂O, MO_{q}, LiₚMO_{q}, and the like may be added thereto. X in "LiX" is at least one selected from the group consisting of F, Cl, Br, and I. The element M in "MO_{q}" and "LiₚMO_{q}" is at least one selected from the group consisting of P, Si, Ge, B, Al, Ga, In, Fe, and Zn. The letters p and q in "MO_{q}" and "LiₚMO_{q}" are each an independent natural number.

The second solid electrolyte 102 may contain two or more kinds selected from the materials listed as the solid electrolyte. The second solid electrolyte 102 may contain, for example, the halide solid content and the sulfide solid content.

The second solid electrolyte 102 may have higher lithium-ion conductivity than the lithium-ion conductivity of the first solid electrolyte 101.

The second solid electrolyte 102 may contain unavoidable impurities such as starting raw materials used when the solid electrolyte is synthesized, by-products, and decomposition products. This also applies to the first solid electrolyte 101.

### <Other Materials>

The cathode material 10 may contain a binder for the purpose of improving the adhesion between particles. The binder is used in order to improve the binding properties of the materials constituting the cathode. Examples of the binder include polyvinylidene fluoride, polytetrafluoroethylene, polyethylene, polypropylene, aramid resins, polyamide, polyimide, polyamide-imide, polyacrylonitrile, polyacrylic acid, polymethyl acrylate, polyethyl acrylate, polyhexyl acrylate, polymethacrylic acid, polymethyl methacrylate, polyethyl methacrylate, polyhexyl methacrylate, polyvinyl acetate, polyvinylpyrrolidone, polyether, polycarbonate, polyether sulfone, polyether ketone, polyether ether ketone, polyphenylene sulfide, hexafluoropropylene, styrene-butadiene rubber, carboxy methyl cellulose, and ethyl cellulose. In addition, copolymers of two or more kinds of monomers selected from the group consisting of tetrafluoroethylene, hexafluoroethylene, hexafluoropropylene, perfluoroalkyl vinyl ether, vinylidene fluoride, chlorotrifluoroethylene, ethylene, propylene, butadiene, styrene, pentafluoropropylene, fluoromethyl vinyl ether, acrylate, acrylic acid, and hexadiene can also be used. One kind selected from these may be used alone, or two or more kinds may be used in combination.

For the reason of having excellent binding properties, the binder may be an elastomer. The elastomer is a polymer having rubber elasticity. The elastomer for use in the binder may a thermoplastic elastomer or a thermosetting elastomer. The binder may contain a thermoplastic elastomer. Examples of the thermoplastic elastomer include styrene-ethylene-butylene-styrene (SEBS), styrene-ethylene-propylene-styrene (SEPS), styrene-ethylene-ethylene-propylene-styrene (SEEPS), butylene rubber (BR), isoprene rubber (IR), chloroprene rubber (CR), acrylonitrile-butadiene rubber (NBR), styrene-butylene rubber (SBR), styrene-butadiene-styrene (SBS), styrene-isoprene-styrene (SIS), hydrogenated isoprene rubber (HIR), hydrogenated butyl rubber (HIIR), hydrogenated nitrile rubber (HNBR), hydrogenated styrene-butylene rubber (HSBR), polyvinylidene fluoride (PVdF), and polytetrafluoroethylene (PTFE). One kind selected from these may be used alone, or two or more kinds may be used in combination.

The cathode material 10 may contain a conductive additive for the purpose of increasing electron conductivity. Examples of the conductive additive include graphites such as natural graphite and artificial graphite; carbon blacks such as acetylene black and Ketjenblack; conductive fibers such as carbon fibers and metal fibers; metal powders such as carbon fluoride and aluminum; conductive whiskers such as zinc oxide and potassium titanate; conductive metal oxides such as titanium oxide; and conductive polymer compounds such as polyaniline, polypyrrole, and polythiophene. When carbon conductive additives are used, cost reduction can be achieved.

### <Method for Covering with First Solid Electrode>

The cathode active material 100 can be covered with the first solid electrolyte 101 by the following method.

A powder of the cathode active material 100 and a powder of the first solid electrolyte 101 are mixed in an appropriate ratio to obtain a mixture. The mixture is subjected to a milling process to impart mechanical energy to the mixture. For the milling process, a mixing apparatus such as a ball mill can be used. In order to inhibit the oxidation of the materials, the milling process may be performed in a dry atmosphere and an inert atmosphere.

The cathode active material 100 covered with the first solid electrolyte 101 may be produced by a dry particle compounding method. The process by the dry particle compounding method includes imparting at least one kind of mechanical energy selected from the group consisting of impact, compression, and shearing to the cathode active material 100 and the first solid electrolyte 101. The cathode active material 100 and the first solid electrolyte 101 are mixed at an appropriate ratio.

The apparatus for use in the production of the cathode active material 100 covered with the first solid electrolyte 101 is not particularly limited, and can be an apparatus that can impart mechanical energy of impact, compression, and shearing to the mixture of the cathode active material 100 and the first solid electrolyte 101. Examples of the apparatus that can impart mechanical energy include compression shearing type processing apparatuses (particle compounding apparatuses) such as ball mills, "Mechanofusion" (manufactured by Hosokawa Micron Corporation), and "Nobilta" (manufactured by Hosokawa Micron Corporation).

"Mechanofusion" is a particle compounding apparatus using a dry mechanical compounding technology by applying strong mechanical energy to a plurality of different raw material powders. In Mechanofusion, mechanical energy of compression, shearing, and friction is imparted to the raw material powders charged between a rotating vessel and a press head. This causes particle compounding.

"Nobilta" is a particle compounding apparatus using a dry mechanical compounding technology developed from the particle compounding technology in order to perform compounding with nanoparticles as raw materials. Nobilta imparts mechanical energy of impact, compression, and shearing to a plurality of kinds of raw material powders to produce composite particles.

In "Nobilta," in a horizontally cylindrical mixing vessel, a rotor disposed so as to have a predetermined gap between the rotor and the inner wall of the mixing vessel rotates at high speed, and a process to force the raw material powders to pass through the gap is repeated a plurality of times. With this, forces of impact, compression, and shearing are acted on the mixture, and composite particles of the cathode active material 100 and the first solid electrolyte 101 can be produced. By adjusting conditions including the rotating speed of the rotor, a processing time, and charged amounts, the thickness of the first solid electrolyte 101, the covering rate of the cathode active material 100 with the first solid electrolyte 101, and the like can be controlled.

However, the processes by the above apparatuses are not essential. The active material covered with the first solid electrolyte 101 may be produced by mixing the cathode active material 100 and the first solid electrolyte 101 using a mortar, a mixer, or the like. The first solid electrolyte 101 may also be deposited on the surface of the cathode active material 100 by various methods such as a spray method, a spray dry coating method, an electrodeposition method, an immersion method, and a mechanical mixing method using a dispersing machine.

The lithium-containing transition metal oxide having a layered rock salt structure tends to easily react with water when an Ni ratio increases. For example, by the reaction of the lithium-containing transition metal oxide and water, a reaction layer is easily formed on the surface of the particles of the active material. The reaction layer itself serves as a resistance layer during charges and discharges to bring a decrease in the performance of the battery. Therefore, in the case of a high Ni ratio, a covering method that does not use water is desirable. However, this is not an essential condition.

### <Method for Producing Cathode Material>

The cathode material 10 can be obtained by mixing the cathode active material 100 covered with the first solid electrolyte 101 and the second solid electrolyte 102. The method for mixing the cathode active material 100 covered with the first solid electrolyte 101 and the second solid electrolyte 102 is not particularly limited. The cathode active material 100 covered with the first solid electrolyte 101 and the second solid electrolyte 102 may be mixed using a tool such as a mortar, or the cathode active material 100 covered with the first solid electrolyte 101 and the second solid electrolyte 102 may be mixed using a mixing apparatus such as a ball mill. During the production of a cathode slurry, in a solvent, both may be mixed using a mixing apparatus such as a homogenizer.

### (Modification)

Fig. 2 is a sectional view of a schematic configuration of a cathode material 20 according to a modification. The cathode material 20 includes the cathode active material 100, a coating layer 105, and the second solid electrolyte 102. The coating layer 105 includes the first solid electrolyte 101 and a base material 103. The cathode active material 100 is coated with the base material 103 and the first solid electrolyte 101 in this order. The coating layer 105 includes a first part including the base material 103 and a second part including the first solid electrolyte 101.

The base material 103 may contain a material having low electron conductivity such as an oxide material or an oxide solid electrolyte.

Examples of the oxide material include SiO₂, Al₂O₃, TiO₂, B₂O₃, Nb₂O₅, WO₃, and ZrO₂. Examples of the oxide solid electrolyte include Li-Nb-O compounds such as LiNbO₃, Li-B-O compounds such as LiBO₂ and Li₃BO₃, Li-Al-O compounds such as LiAlO₂, Li-Si-O compounds such as Li₄SiO₄, Li-S-O compounds such as Li₂SO₄, Li-Ti-O compounds such as Li₄Ti₅O₁₂, Li-Zr-O compounds such as Li₂ZrO₃, Li-Mo-O compounds such as Li₂MoO₃, Li-V-O compounds such as LiV₂O₅, and Li-W-O compounds such as Li₂WO₄. The base material 103 may be one kind selected from these or a mixture of two or more kinds.

The base material 103 may contain a solid electrolyte having lithium-ion conductivity. The base material 103 is typically an oxide solid electrolyte having lithium-ion conductivity. The oxide solid electrolyte has high ionic conductivity and has excellent high-potential stability. By using the oxide solid electrolyte as the base material 103, the charge-discharge efficiency of the battery can be improved.

The base material 103 may be a material containing Nb. The base material 103 typically contains lithium niobate (LiNbO₃). With such a configuration, the charge-discharge efficiency of the battery can be improved. As the oxide solid electrolyte as the base material 103, the oxide solid electrolyte previously described can also be used.

In the coating layer 105, the thickness of the first part including the base material 103 is, for example, greater than or equal to 1 nm and less than or equal to 500 nm. When the thickness of the first part including the base material 103 is appropriately adjusted, the contact between the cathode active material 100 and the second solid electrolyte 102 can be sufficiently inhibited.

The method for forming the coating layer 105 on the surface of the cathode active material 100 is not particularly limited. The first part including the base material 103 is formed, and then the second part including the first solid electrolyte 101 can be formed by the previously described method. Examples of the method for forming the first part including the base material 103 include a liquid phase coating method and a vapor phase coating method.

For example, in the liquid phase coating method, a precursor solution of the base material 103 is applied to the surface of the cathode active material 100. When a layer containing LiNbO₃ is formed, the precursor solution can be a mixed solution (a sol solution) of a solvent, a lithium alkoxide, and a niobium alkoxide. Examples of the lithium alkoxide include lithium ethoxide. Examples of the niobium alkoxide include niobium ethoxide. The solvent is, for example, an alcohol such as ethanol. In accordance with the target composition of the base material 103, the amounts of the lithium alkoxide and the niobium alkoxide are adjusted. As needed, water may be added to the precursor solution. The precursor solution may be either acidic or alkaline.

The method for applying the precursor solution to the surface of the cathode active material 100 is not particularly limited. For example, the precursor solution can be applied to the surface of the cathode active material 100 using a tumbling fluidized bed granulating-coating machine. With the tumbling fluidized bed granulating-coating machine, while tumbling and fluidizing the cathode active material 100, the precursor solution is sprayed onto the cathode active material 100, and the precursor solution can be applied to the surface of the cathode active material 100. With this, a precursor film is formed on the surface of the cathode active material 100. Then, the cathode active material 100 coated with the precursor film is heat-treated. Due to the heat treatment, gelation of the precursor film proceeds to form the first part including the base material 103.

Examples of the vapor phase coating method include a pulsed laser deposition (PLD) method, a vacuum deposition method, a sputtering method, a thermal chemical vapor deposition (CVD) method, and a plasma chemical vapor deposition method. For example, in the PLD method, an ionic conductive material as a target is irradiated with a pulsed laser with strong energy (for example, a KrF excimer laser, wavelength: 248 nm) to deposit the sublimated ionic conductive material on the surface of the cathode active material 100. When a layer containing LiNbO₃ is formed, LiNbO₃ sintered at high density is used as a target.

However, the method for forming the first part including the base material 103 is not limited to the above. The first part including the base material 103 may be formed by various methods such as a spray method, a spray dry coating method, an electrodeposition method, an immersion method, and a mechanical mixing method using a dispersing machine.

### (Second Embodiment)

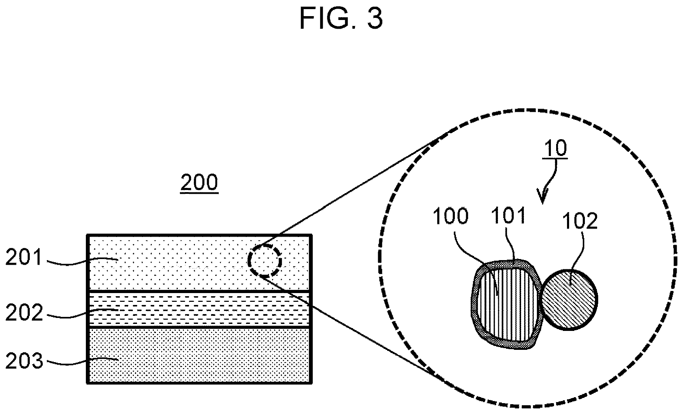

Fig. 3 is a sectional view of a schematic configuration of a battery according to a second embodiment. A battery 200 includes a cathode 201, a separator layer 202, and an anode 203. The separator layer 202 is disposed between the cathode 201 and the anode 203. The cathode 201 includes at least one of the cathode material 10 or the cathode material 20 described in the first embodiment. With the present embodiment, the cathode 201 having excellent deterioration resistance and the battery 200 including the same can be provided.

The thickness of each of the cathode 201 and the anode 203 may be greater than or equal to 10 µm and less than or equal to 500 µm. When the thickness of the cathode 201 and the anode 203 is greater than or equal to 10 µm, sufficient battery energy density can be ensured. When the thickness of the cathode 201 and the anode 203 is less than or equal to 500 µm, the operation of the battery 200 at high output can be achieved.

The separator layer 202 is a layer containing an electrolyte material. The separator layer 202 may contain at least one solid electrolyte selected from the group consisting of a sulfide solid electrolyte, an oxide solid electrolyte, a halide solid electrolyte, a polymeric solid electrolyte, and a complex hydride solid electrolyte. The details of each solid electrolyte are as described in the first embodiment.

The thickness of the separator layer 202 may be greater than or equal to 1 µm and less than or equal to 300 µm. When the thickness of the separator layer 202 is greater than or equal to 1 µm, the cathode 201 and the anode 203 can be separated from each other more surely. When the thickness of the separator layer 202 is less than or equal to 300 µm, the operation of the battery 200 at high output can be achieved.

The anode 203 contains a material having a characteristic of occluding and releasing metal ions (for example, lithium ions) as an anode active material.

As the anode active material, metal materials, carbon materials, oxides, nitrides, tin compounds, silicon compounds, and the like can be used. The metal materials may be elemental metals. Alternatively, the metal materials may be alloys. Examples of the metal materials include lithium metal and lithium alloys. Examples of the carbon materials include natural graphite, coke, graphitizing carbon, carbon fiber, spherical carbon, artificial graphite, and amorphous carbon. From the viewpoint of capacity density, silicon (Si), tin (Sn), silicon compounds, tin compounds, and the like can be suitably used.

The median diameter of the particles of the anode active material may be greater than or equal to 0.1 µm and less than or equal to 100 µm.

The anode 203 may contain other materials such as a solid electrolyte. As the solid electrolyte, the materials described in the first embodiment can be used.

### (Appendix)

From the above description, the following technologies are disclosed.

### (Technology 1)

A cathode material including:
a cathode active material;
a coating layer containing a first solid electrolyte, and coating at least part of a surface of the cathode active material; and
a second solid electrolyte, wherein
the first solid electrolyte contains Li, Al, and X, and does not contain Ti,
X is at least one selected from the group consisting of F, Cl, Br, and I, and
a ratio of a volume of the first solid electrolyte to a total volume of the first solid electrolyte and the second solid electrolyte is greater than or equal to 1.0% and less than or equal to 25.0%.

With such a configuration, the deterioration resistance of the battery to a charge-discharge cycle can be improved.

### (Technology 2)

The cathode material according to Technology 1, wherein the ratio is greater than or equal to 4.0% and less than or equal to 15.0%. With such a configuration, both the initial performance and the deterioration resistance to the charge-discharge cycle of the battery can be achieved.

### (Technology 3)

The cathode material according to Technology 1, wherein the ratio is greater than or equal to 5.5% and less than or equal to 15.0%. With such a configuration, both the initial performance and the deterioration resistance to the charge-discharge cycle of the battery can be achieved.

### (Technology 4)

The cathode material according to any one of Technologies 1 to 3, wherein the second solid electrolyte contains Li and S. When the sulfide solid electrolyte is contained as the second solid electrolyte in the battery, a high effect can be obtained by applying the technology of the present disclosure.

### (Technology 5)

The cathode material according to any one of Technologies 1 to 4, wherein the first solid electrolyte contains at least one element selected from the group consisting of metal elements other than Li, Ti, and Al and metalloid elements. By replacing Al with a different element, various effects such as improvement in lithium-ion conductivity and improvement in mechanical characteristics are expected.

### (Technology 6)

The cathode material according to any one of Technologies 1 to 5, wherein the first solid electrolyte contains at least one selected from the group consisting of Zr, Y, Ca, and Mg. By containing such an element, the first solid electrolyte shows high lithium-ion conductivity.

### (Technology 7)

The cathode material according to any one of Technologies 1 to 6, wherein a ratio of an amount of substance of F to a total of amounts of substance of anions constituting the first solid electrolyte is greater than or equal to 0.5 and less than or equal to 1.0. With such a configuration, the first solid electrolyte can be expected to have higher oxidation resistance.

### (Technology 8)

The cathode material according to any one of Technologies 1 to 7, wherein in the first solid electrolyte, a ratio of an amount of substance of Li to amounts of substance of cations other than Li is greater than or equal to 1.5 and less than or equal to 6.0. With such a configuration, the lithium-ion conductivity of the first solid electrolyte can be improved.

### (Technology 9)

The cathode material according to any one of Technologies 1 to 8, wherein the first solid electrolyte contains a phase represented by Formula (1):

Li_{6-αy}(M₁₋ₓAlₓ)_{y}F₆) (1)

where M is at least one element selected from the group consisting of metal elements other than Ti and Al and metalloid elements, α is an average valence of (M₁₋ₓAlₓ), and 0 < x ≤ 1 and 0 < y ≤ 1.5 are satisfied. The halide solid electrolyte containing the phase represented by Formula (1) has higher ionic conductivity than halides consisting only of Li and a halogen element, such as LiF.

### (Technology 10)

The cathode material according to any one of Technologies 1 to 9, wherein the cathode active material contains a lithium-containing transition metal oxide having a layered rock salt structure, and the lithium-containing transition metal oxide contains Li and Ni. With such a configuration, the battery is expected to have good output characteristics.

### (Technology 11)

The cathode material according to Technology 10, wherein in the lithium-containing transition metal oxide, a ratio of an amount of substance of Ni to a total of amounts of substance of cations other than Li is greater than or equal to 0.6. In the lithium-containing transition metal oxide having a layered rock salt structure, when the ratio of the amount of substance of Ni to the total amount of substance of cations other than lithium is high, the charge-discharge capacity per unit weight increases.

### (Technology 12)

The cathode material according to any one of Technologies 1 to 11, wherein the second solid electrolyte is in contact with the cathode active material via the coating layer. By applying the technology of the present disclosure to such a configuration, a higher effect is obtained.

### (Technology 13)

A cathode including the cathode material according to any one of Technologies 1 to 12.

### (Technology 14)

A battery including the cathode according to Technology 13.

The present disclosure can provide a cathode having excellent deterioration resistance and a battery including the same.

### EXAMPLES

The details of the present disclosure will be described below using Examples and Comparative Example. Note that the electrode and the battery of the present disclosure are not limited to the following Examples.

### <EXAMPLE 1>

### [Production of First Solid Electrolyte]

LiF and AlF₃ as raw material powders were weighed in a molar ratio of LiF:AlF₃ = 3:1 in an argon atmosphere having a dew point of lower than or equal to -60°C. These powders were charged into a 45 cc pod for a planetary ball mill together with balls with a diameter of 1mm (25 g). γ-Butyrolactone (GBL) was added dropwise to the pod so as to have a solid content ratio of 30%. The solid content ratio is calculated by {(the mass of the charged raw materials)/(the mass of the charged raw materials + the mass of the charged solvent)} × 100. Using the planetary ball mill, a milling process was performed at 500 rpm for 12 hours. After the milling process, the balls were separated to obtain slurry. The obtained slurry was dried at 270°C for 1 hour under a nitrogen flow using a heating mantle. The obtained solid was pulverized with a mortar to obtain a powder of a halide solid electrolyte by Example 1. The halide solid electrolyte by Example 1 had a composition represented by Li₃AlF₆ (hereinafter abbreviated as LAF).

### [Formation of Coating Layer]

As a cathode active material, a powder of Li(Ni,Co,Al)O₂ (hereinafter abbreviated as NCA) was provided. A coating layer formed of LAF was formed on the surface of NCA. The coating layer was formed by a compression shearing process using a particle compounding apparatus (NOB-MINI manufactured by Hosokawa Micron Corporation). Specifically, NCA and LAF were weighed so as to give a volume ratio of 98.9:1.1, and processed under conditions with a blade clearance: 2 mm, the number of revolutions: 8,000 rpm, and a processing time: 30 min. This produced a coated active material of Example 1.

### [Production of Sulfide Solid Electrolyte]

In an argon glove box with a dew point of lower than or equal to -60°C, Li₂S and P₂S₅ as raw material powders were weighed so as to give a molar ratio of Li₂S:P₂S₅ = 75:25. These were pulverized and mixed with a mortar to obtain a mixture. Then, using a planetary ball mill (Type P-7 manufactured by Fritsch), the mixture was subjected to a milling process under conditions of 10 hours and 510 rpm. This produced a glassy solid electrolyte. The glassy solid electrolyte was heat-treated under conditions of 270°C and 2 hours in an inert atmosphere. This produced Li₂S-P₂S₅ (hereinafter abbreviated as "LPS"), a glass-ceramic solid electrolyte.

### [Production of Cathode Material]

In an argon glove box, the coated active material of Example 1 and LPS were weighed so as to give a volume ratio between LAF and LPS of 1.5:98.5. These were mixed with an agate mortar to produce a cathode material of Example 1. In the volume ratio between NCA and the solid electrolyte, the "solid electrolyte" means the total volume of LAF and LPS.

### <EXAMPLE 2>

A coated active material of Example 2 was obtained by the same method as in Example 1 except that the volume ratio between NCA and LAF was changed to 96.9:3.1. A cathode material of Example 2 was obtained by the same method as in Example 1 except that the volume ratio between LAF and LPS was changed to 4.4:95.6.

### <EXAMPLE 3>

A coated active material of Example 3 was obtained by the same method as in Example 1 except that the volume ratio between NCA and LAF was changed to 96.4:3.6. A cathode material of Example 3 was obtained by the same method as in Example 1 except that the volume ratio between LAF and LPS was changed to 5.1:94.9.

### <EXAMPLE 4>

A coated active material of Example 4 was obtained by the same method as in Example 1 except that the volume ratio between NCA and LAF was changed to 95.9:4.1. A cathode material of Example 4 was obtained by the same method as in Example 1 except that the volume ratio between LAF and LPS was changed to 5.8:94.2.

### <EXAMPLE 5>

A coated active material of Example 5 was obtained by the same method as in Example 1 except that the volume ratio between NCA and LAF was changed to 95.4:4.6. A cathode material of Example 5 was obtained by the same method as in Example 1 except that the volume ratio between LAF and LPS was changed to 6.6:93.4.

### <EXAMPLE 6>

A coated active material of Example 6 was obtained by the same method as in Example 1 except that the volume ratio between NCA and LAF was changed to 94.4:5.6. A cathode material of Example 6 was obtained by the same method as in Example 1 except that the volume ratio between LAF and LPS was changed to 8.1:91.9.

### <EXAMPLE 7>

A coated active material of Example 7 was obtained by the same method as in Example 1 except that the volume ratio between NCA and LAF was changed to 91.9:8.1. A cathode material of Example 7 was obtained by the same method as in Example 1 except that the volume ratio between LAF and LPS was changed to 12:88.

### <EXAMPLE 8>

A coated active material of Example 8 was obtained by the same method as in Example 1 except that the volume ratio between NCA and LAF was changed to 84.9:15.1. A cathode material of Example 8 was obtained by the same method as in Example 1 except that the volume ratio between LAF and LPS was changed to 24.2:75.8.

### <COMPARATIVE EXAMPLE 1>

NCA that was not coated with LAF was used as a cathode active material of Comparative Example 1.

In the coated active materials of Examples and Comparative Example, the ratios of the volume of LAF to the total volume of LAF and NCA were as listed in Table 1. In the cathode materials of Examples and Comparative Example, the ratios of the volume of LAF to the total volume of LAF and LPS were as listed in Table 1.

### [Production of Cathode]

In an argon glove box with a dew point of lower than or equal to -60°C, the cathode material, a binder, a solvent, and a conductive additive were mixed, and dispersed using a homogenizer to produce a slurry of the cathode material. The slurry was applied onto a current collector, and dried on a hot plate to produce cathodes of Examples 1 to 8 and Comparative Example 1.

### [Production of Battery]

Lithium titanate (hereinafter abbreviated as LTO) was used as an anode active material. In an argon glove box with a dew point of lower than or equal to -60°C, a binder, a solvent, a conductive additive, and LPS were mixed, and dispersed using a homogenizer. This produced a mixture of the binder, the solvent, the conductive additive, and LPS. LTO was added to the mixture and mixed therewith, the mixture was dispersed with a homogenizer to produce a slurry of an anode material. The slurry was applied onto a current collector, and dried on a hot plate to produce an anode. The mixing ratio between LTO and LPS was 65:35 in terms of volume ratio.

LPS, a binder, and a solvent were mixed, and dispersed using a homogenizer. This produced a slurry containing LPS. The slurry was applied to a base material, and dried on a hot plate to produce an electrolyte layer.

The anode and the electrolyte layer were stacked on each other, and pressure-molded while being heated, and then the base material was removed from the electrolyte layer. Next, the cathode was stacked on the electrolyte layer such that the electrolyte layer was disposed between the cathode and the anode, which were pressure-molded while being heated. A current collection lead was attached to the obtained mold, which was put into a laminate packaging material, and the packaging material was sealed. This produced batteries of Examples 1 to 8 and Comparative Example 1.

### [Evaluation of Battery Performance]

The battery was placed in a thermostatic bath at 25°C. (i) The battery was constant current charged to a voltage of 2.7 V at a current value of 0.4 mA, which was 0.3C rate (3.3 hour rate) with respect to the theoretical capacity of the battery, and then constant voltage charged at a voltage of 2.7 V, and the charge was ended at a current value of 0.013 mA, which was 0.01C rate. Subsequently, the battery was constant current discharged at 0.3C rate to a voltage of 1.5 V to measure the initial value of 0.3C discharge capacity. (ii) Next, the battery was again constant current charged to a voltage of 2.7 V at 0.3C rate, and then constant voltage charged at a voltage of 2.7 V, and the charge was ended at a current value of 0.013 mA, which was 0.01C rate. Subsequently, the battery was constant current discharged to a voltage of 1.5 V at a current value of 6.7 mA, which was 5C rate, to measure the initial value of 5C discharge capacity. (iii) Next, the battery was again constant current charged to a voltage of 2.7 V at 0.3C rate, and then constant voltage charged at a voltage of 2.7 V, and the charge was ended at a current value of 0.013 mA, which was 0.01C rate. Subsequently, an amplitude of 10 mV was applied at a frequency of 1 MHz to 0.01 Hz to perform electrochemical impedance measurement.

Subsequently, the temperature inside the thermostatic bath was changed to 60°C, and a constant current charge at 5C rate was performed to 2.7 V. Next, a constant voltage charge was performed until the current value decreased to a current value of 0.3C rate. Furthermore, a constant current discharge was performed to 1.5 V at 1C rate. These charges and discharge were performed for 100 cycles.

Again, the temperature of the thermostatic bath was set at 25°C, and the evaluations (i), (ii), and (iii) were performed.

The ratio of the 5C discharge capacity before cycle to the 0.3C discharge capacity before cycle (%) was calculated. The calculated results are listed in Table 1 as "5C/0.3C discharge capacity ratio before cycle (%)".

The ratio of the 5C discharge capacity after cycle to the 0.3C discharge capacity after cycle (%) was calculated. The calculation results are listed in Table 1 as "5C/0.3C discharge capacity ratio after cycle (%)". In Table 1, "5C/0.3C discharge capacity ratio after cycle (%)" is represented by the ratio of the 5C/0.3C discharge capacity ratio after cycle to the 5C/0.3C discharge capacity ratio before cycle (%).

In a Cole-Cole plot obtained by the electrochemical impedance measurement before cycle, from the value of the real axis intercept on the high-frequency side of an arc representing the impedance of the battery, the value of the real axis intercept on the low-frequency side was subtracted to calculate an arc resistance before cycle. The results are listed in Table 1.

An arc resistance after cycle was calculated by the same method. The calculation results are listed in Table 1 as "Arc resistance after cycle (%)". In Table 1, "Arc resistance after cycle (%)" is represented by the ratio of the arc resistance after cycle to the arc resistance before cycle (%).

**[Table 1]**

| | LAF/ (LAF+NCA) (vol%) | LAF/ (LAF+LPS) (vol%) | Arc resistance before cycle (Ω) | 5C/0.3C discharge capacity ratio before cycle (%) | Arc resistance after cycle* (%) | 5C/0.3C discharge capacity ratio after cycle* (%) |
|---|---|---|---|---|---|---|
| Example 1 | 1.1 | 1.5 | 21.2 | 78.7 | 337 | 47.4 |
| Example 2 | 3.1 | 4.4 | 3.5 | 83.9 | 160 | 84.2 |
| Example 3 | 3.6 | 5.1 | 3.0 | 83.4 | 163 | 89.6 |
| Example 4 | 4.1 | 5.8 | 3.2 | 83.8 | 145 | 89.9 |
| Example 5 | 4.6 | 6.6 | 3.0 | 82.8 | 153 | 91.5 |
| Example 6 | 5.6 | 8.1 | 3.2 | 81.9 | 137 | 93.9 |
| Example 7 | 8.1 | 12.0 | 4.3 | 79.0 | 143 | 98.1 |
| Example 8 | 15.1 | 24.2 | 15.9 | 58.4 | 131 | 86.6 |
| Comparative Example 1 | 0.0 | 0.0 | 884.3 | 20.5 | 905 | 3.51 |

| | | | | | | |
|---|---|---|---|---|---|---|
| * Arc resistance and discharge capacity ratio after cycle are represented by the ratio to the values before cycle | | | | | | |

As listed in Table 1, by coating the cathode active material with the halide solid electrolyte, the arc resistance decreased. That is, the output characteristics of the battery improved. Furthermore, the increase rate of the arc resistance by the charge-discharge cycle was also significantly decreased. That is, it has been suggested that the reaction of oxygen released from the cathode active material and the sulfide solid electrolyte is inhibited, thereby improving deterioration resistance to the charge-discharge cycle together with the initial output characteristics.

As in the arc resistance, by coating the cathode active material with the halide solid electrolyte, the 5C/0.3C discharge capacity ratio increased. Furthermore, the decrease rate of the discharge capacity ratio by the charge-discharge cycle was also significantly decreased. That is, the reaction of oxygen released from the cathode active material and the sulfide solid electrolyte was inhibited.

The above effects were related to the ratio of the volume of the first solid electrolyte (LAF) to the total volume of the first solid electrolyte (LAF) and the second solid electrolyte (LPS). That is, it has been suggested from the results listed in Table 1 that the above effects are obtained by appropriately adjusting the ratio.

The above effects were also related to the ratio of the volume of the first solid electrolyte (LAF) to the total volume of the first solid electrolyte (LAF) and the cathode active material (NCA). That is, it has been suggested from the results listed in Table 1 that the above effects are obtained by appropriately adjusting the ratio.

The effect of inhibiting the reaction of the cathode active material and the sulfide solid electrolyte is considered to be caused by the high oxidation resistance of the halide solid electrolyte. From the viewpoint of oxidation resistance, it is considered that fluorine is the most excellent, but even if part or all of fluorine is replaced with other halogen elements, the halide solid electrolyte produces the same effect as the effect obtained in the present examples.

When a metal or metalloid element other than Al is contained in the halide solid electrolyte also, the halide solid electrolyte produces the same effect as the effect obtained in the present examples. This is because it is considered that the high oxidation resistance of the halide solid electrolyte producing the effect of inhibiting the reaction of the cathode active material and the sulfide solid electrolyte is caused by the high electronegativity of halogen elements.

It is considered that the results shown in the present examples are also obtained when the cathode active material other than NCA, especially a lithium-containing transition metal oxide is used. It is considered that the effect of inhibiting the reaction of oxygen released from the lithium-containing transition metal oxide and the sulfide solid electrolyte is obtained without depending on the composition of the cathode active material.

It is inferred that the results shown in the present examples are also obtained when the sulfide solid electrolyte other than LPS is used as the second solid electrolyte. This is because the sulfide solid electrolyte other than LPS also tends to have poor oxidation resistance as in LPS.

### Industrial Applicability

The technology of the present disclosure is useful for solid batteries.

### Reference Signs List

- 10, 20: cathode material
- 100: cathode active material
- 101: first solid electrolyte
- 102: second solid electrolyte
- 103: base material
- 104, 105: coating layer
- 200: battery
- 201: cathode
- 202: separator layer
- 203: anode

## Claims

1. A cathode material comprising:
a cathode active material;
a coating layer containing a first solid electrolyte, and coating at least part of a surface of the cathode active material; and
a second solid electrolyte, wherein
the first solid electrolyte contains Li, Al, and X, and does not contain Ti,
X is at least one selected from the group consisting of F, Cl, Br, and I, and
a ratio of a volume of the first solid electrolyte to a total volume of the first solid electrolyte and the second solid electrolyte is greater than or equal to 1.0% and less than or equal to 25.0%.

2. The cathode material according to claim 1, wherein the ratio is greater than or equal to 4.0% and less than or equal to 15.0%.

3. The cathode material according to claim 1, wherein the ratio is greater than or equal to 5.5% and less than or equal to 15.0%.

4. The cathode material according to claim 1, wherein the second solid electrolyte contains Li and S.

5. The cathode material according to claim 1, wherein the first solid electrolyte contains at least one element selected from the group consisting of metal elements other than Li, Ti, and Al and metalloid elements.

6. The cathode material according to claim 1, wherein the first solid electrolyte contains at least one selected from the group consisting of Zr, Y, Ca, and Mg.

7. The cathode material according to claim 1, wherein a ratio of an amount of substance of F to a total of amounts of substance of anions constituting the first solid electrolyte is greater than or eaual to 0.5 and less than or eaual to 1.0.

8. The cathode material according to claim 1, wherein in the first solid electrolyte, a ratio of an amount of substance of Li to amounts of substance of cations other than Li is greater than or equal to 1.5 and less than or equal to 6.0.

9. The cathode material according to claim 1, wherein the first solid electrolyte contains a phase represented by Formula (1):
Li_{6-αy}(M₁₋ₓAlₓ)_{y}F₆) (1)
where M is at least one element selected from the group consisting of metal elements other than Ti and Al and metalloid elements, α is an average valence of (M₁₋ₓAlₓ), and 0 < x ≤ 1 and 0 < y ≤ 1.5 are satisfied.

10. The cathode material according to claim 1, wherein
the cathode active material contains a lithium-containing metal oxide having a layered rock salt structure, and
the lithium-containing metal oxide contains Li and Ni.

11. The cathode material according to claim 10, wherein in the lithium-containing metal oxide, a ratio of an amount of substance of Ni to a total of amounts of substance of cations other than Li is greater than or equal to 0.6.

12. The cathode material according to claim 1, wherein the second solid electrolyte is in contact with the cathode active material via the coating layer.

13. A cathode comprising the cathode material according to any one of claims 1 to 12.

14. A battery comprising the cathode according to claim 13.
